# EUROPÄISCHE PATENTSCHRIFT

(11) **EP 1 258 830 B1**
(45) Veröffentlichungstag und Bekanntmachung des Hinweises auf die Patenterteilung: **27.08.2008**
(21) Anmeldenummer: 02010096.2
(22) Anmeldetag: 07.05.2002
(51) Int. Cl.: G06K 19/077, G06K 19/07

(54) **Verfahren zum Abgleich eines Antennenschwingkreises eines passiven Transponders**
Method for adjusting a resonating circuit of a passive transponder
Méthode pour l'ajustement d'un circuit résonnant d'un transpondeur passif

(30) Priorität: 18.05.2001 DE 10124222
(43) Veröffentlichungstag der Anmeldung: 20.11.2002
(73) Patentinhaber: ATMEL Germany GmbH, 74072 Heilbronn (DE)
(72) Erfinder: Feibig, Cordula, 74172 Neckarsulm (DE); Friedrich, Ulrich, 74248 Ellhofen (DE)
(74) Vertreter: Müller, Wolf-Christian

(56) Entgegenhaltungen:
- WO-A-98/40846
- US-B1- 6 229 443

## Beschreibung

Die vorliegende Erfindung betrifft ein Verfahren zur Reduzierung der Verluste eines Antennenschwingkreises eines passiven Transponders, gemäß dem Oberbegriff des Patentanspruchs 1.

Aus der Druckschrift WO 98 40846 ist eine passiver Transponder bekannt, bei dem eine externe Kapazität parallel zur Eingangsantenne geschaltet wird. Welterhin Ist aus der Druckschrift US 6 229 443 B1 ein Transponder offenbart, bei dem der Eingangskrels mittels einer Schaltung gegen Überspannungen geschützt wird.

Passive Transponder werden im Bereich der kontaktlosen Kommunikation zur Identifikation (RFID) eingesetzt. Hierzu wird die von der Baslsstation ausgesandte Trägerwelle von dem Transponder moduliert. Da passive Transponder keine elgene Energieversorgung aufweisen, muß die Energie für die Integrierte Schaltung des passiven Transponders, durch Absorptionsmodulation der Trägerwelle entzogen werden. Bei den derzeit verwendeten passiven 125 kHz Systemen wird dies im elektromagnetischen Nahfeld durch eine induktive Kopplung erreicht. Die damit erzielte energetische Reichweite liegt im Bereich von wenigen cm bis etwa 0.5 m und ist abhängig von den jeweiligen nationalen HF-Vorschriften. Mit den weiter steigenden Sicherheitsanforderungen an die Identifikation werden immer höhere Datenübertragungsraten benötigt, um die Identiflkationszelten klein zu halten. Dies Ist nur mit hohen Tragerfrequanzen im UHF (868 MHz) oder Mikrowellenbereich (2.45 GHz) zu erreichen. Bei diesen Frequenzen werden üblicherweise Dipolantennen verwendet. Ziel der Entwicklung in diesem Gebiet ist es, mit passiven Systemen hohe Reichweiten bei vertretbaren Sendeleistungen der Basisstation zu erzielen.

Aus der HF-Technik ist bekannt, dargestellt beispielsweise in RFID-Handbuch 2 Auflage, 2000, S.121, daß für eine Energieaufnahme aus dem Feld des Senders, die Länge der Dipolantenne an die Wellenlänge des Senders anzupassen ist. Durch eine Impedanzanpassung an den durch die Bauform der Antenne vorgegebenen Wellenwiderstand wird erreicht, daß eine vollständige Absorption der empfangenen elektromagnetischen Welle erfolgt. Sofern sich die Transponderantenne in einem größeren Abstand zum Sender befindet, ist die daraus resultierende Antennenspannung zu klein, um daraus durch eine einfache Gleichrichtung eine Versorgungsspannung für den Transponder zu erzeugen. Aufgrund den HF-Vorschriften In den europäischen Landem, liegen die Reichweiten vorhandener UHF-Transponder unter einem Meter.

Aufgabe der vorllegenden Erfindung ist es, ein Verfahren zur Reduzierung der Verluste eines Antennenschwingkreises eines passiven Transponders anzugeben, mittels dem die Reichwelte eines passiven Transponders für ein hochfrequentes elektromagnetisches Trägerfeld erhöht wird. Die zweite Aufgabe ist es, eine Halbleiteranordnung zur Umsetzung des Verfahrens anzugeben.

Die erstgenannte Aufgabe wird erfindungsgemäß durch ein Verfahren der eingangs genannten Art mit den Merkmalen des Patentanspruches 1 gelöst. Die zweltgenannte Aufgabe wird durch die Merkmale des Patentanspruchs 7 gelöst. Günstige Ausgestaltungsformen sind Gegenstand von Unteransprüchen.

Hiernach besteht das Wesen der Erfindung darin, die Reichweite eines passiven Transpondars zu erhöhen, Indem die aus einem hochfrequenten elektrischen Feld kapazitiv absorblerte Betrlabsenergle mittels eines seriellen Schwingkreises ausschließlich einem Eingangsteil des Transponders zur Erzeugung einer Versorgungsspannung für die Integrierte Schaltung zur Verfügung gestellt wird. Hierzu werden bei dem Eingangstell des Transponders, der einen Halbleiterkörper mit einer integrierten Schaltung mit einem Signalteil mit Bezugspotentlalanschluß aufweist, und der einen auf einem Träger angeordnete Antennenanordnung aufweist, und die Antennenanordnung über eine auf dem Halbleiterkörper angeschlossene Kontaktfläche mit der integrierten Schaltung verbunden ist, und bei dem die Antenne mit der Eingangskapazität der integrierten Schaltung einen seriellen Schwingkreis bildet, zur Erhöhung der Güte des Antennenschwingkreises die parasitären kapazitiven und resistiven Anteile, die einen Strompfad zwischen der Kontaktfläche und dem Bezugspotentlal bilden, reduziert, indem der Strompfad an wenigstens einer Stelle, mittels einer Hintereinanderschaltung und Parallelschaltung von kapazitiven und resistiven Anteilen, In einen ersten Strompfad und einen zwelten zum ersten parallelen Strompfad aufgetellt wird, und im ersten Strompfad eine erste Kapazität mit einem ersten Widerstand In Serie geschaltet wird und im zweiten Strompfad eine zweiten Kapazität mit einem zweiten Widerstand in Serie geschaltet wird, wobei die erste Kapazität eine höhere Güte als die zweite Kapazität aufweist und der erste Widerstand einen kleineren Widerstandswert als der zweite Widerstand aufweist.

Der Vorteil des neuen Verfahren ist es, daß die aus der sehr kleinen Antennenspannung mittels des seriellen Schwingkreises erzeugten hohen Spannungswerten nicht durch mit der Kontaktfläche verbundenen parasltären kapazitiven und resistiven Antelle absorblert werden. Damit steht die von der Antenne absorbierte Leistung dem Eingangstell der integrierten Schaltung zur Erzeugung der Versorgungsspannung zur Verfügung. Da der serielle Schwingkreis nur eine sehr kleine Induktivität aufweist, wird mit der Reduzierung des kapazi-tiven Anteils (Imaginärtells) der Kontaktflache erreicht, daß sich die Güte des Signalteils er-höhen läßt. Durch den verbesserten Wirkungsgrad des Empfangsteils des Transponders, wird die Reichweite bei passiven RFID-Systemen erheblich gesteigert.

In einer Weiterbildung des Verfahrens ist es vorteilhaft der Strompfad zwischen der Kontaktfläche und dem Bezugspotential an wenigstens einer Stelle, mittels einer Hintereinanderschaltung und Parallelschaltung von kapazitiven und resistiven Anteilen, in einen ersten Strompfad und einen zweiten Strompfad aufzuteilen, indem einer ersten Kapazität mit hoher Güte und eine Parallelschaltung, von einer kleinen Kapazität, deren Kapazitätswert vorzugsweise im Bereich von einigen fF (10e-18 Farad) liegt, mit geringer Güte und einer kleinen Kapazität, deren Kapazitätswert vorzugsweise im Bereich von einigen fF liegt, mit hoher Güte, in Reihe geschaltet wird.

In einer anderen Weiterbildung des Verfahrens werden die kleinen Kapazitäten mittels Dioden erzeugt, da die für die Herstellung von Dioden notwendigen PN-Übergänge sich im Herstellungsprozeß der integrierten Schaltung einfach realisieren lassen. Ferner lassen sich räumlich begrenzte PN-Übergänge herstellen, die einen geringen Kapazitätsbelag aufweisen. Ferner ist es vorteilhaft die erste Kapazität., die eine hohe Güte benötigt, dadurch zu erzeugen, indem in einer unter der Kontaktfläche liegenden Isolationsschicht eine leitfähige Schicht eingezogen wird.

Das erfindungsgemäße Verfahren soll nachfolgend anhand der Ausführungsbeispiele im Zusammenhang mit den Zeichnungen erläutert werden. Es zeigen, die
- Fig. 1: ein HF-Ersatzschaltbild eines Eingangsteils eines Transponders, und
- Fig. 2a: einen Querschnitt durch eine Kontaktfläche für einen Antennenanschluß innerhalb einer integrierten Halbleiteranordnung nach dem bisherigen Stand der Technik, und
- Fig. 2b: das HF- Ersatzschaltbild der Kontaktfläche von der Fig. 2a, und
- Fig. 3a: einen Querschnitt durch eine Kontaktfläche für einen Antennenanschluß, bei der die mit der Kontaktfläche verbundenen Real- und Imaginärteile mittels einer Schottky-Diodenanordnung unterdrückt werden, und
- Fig. 3b: einen Querschnitt durch eine Kontaktfläche, bei der im Unterschied zu der Figur 3a die Schottky-Diodenanordnung durch eine herkömmlichen Diodendiodenanordnung ersetzt wird, und
- Fig. 3c: das HF-Ersatzschaltbild für den in Figur 3a abgebildeten Querschnitt.

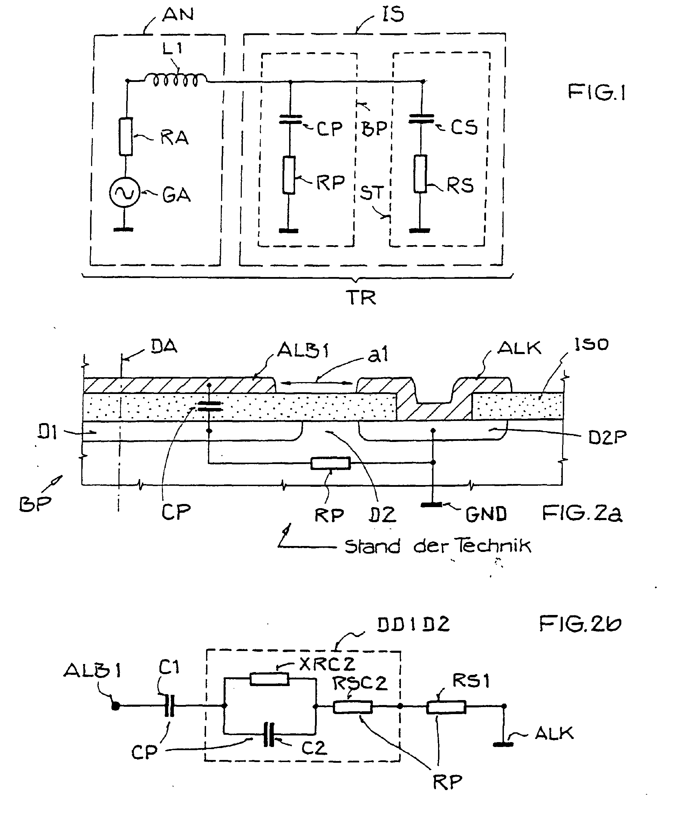

Das in Figur 1 dargestellte HF-Ersatzschaltbild beschreibt den Aufbau eines Empfangsteils eines passiven Transponders TR für eine Energieaufnahme durch Absorption aus einem hochfrequenten elektromagnetischen Trägerfeld einer Basisstation (nicht abgebildet). Der Transponder TR besteht aus einer Antenne AN und einer integrierten Schaltung IS, die beide in einem gemeinsamen Gehäuse (nicht abgebildet) angeordnet sind. Dabei ist die Antenne AN mit der integrierten Schaltung IS mittels einer Kontaktfläche BP und eines Bonddrahtes verbunden, wobei die Kontaktfläche BP innerhalb der integrierten Schaltung IS mit einem Signalteil ST verschaltet ist. Die Antenne AN liegt dabei in Serie zu einer Parallelschaltung aus der Kontaktfläche BP und dem Signalteil ST. Die Aufgabe des Signalteils ST, die beispielsweise eine Spannungsverdopplerschaltung enthält, ist es, mittels der von der Antenne AN aufgenommenen Energie, für die integrierte Schaltung IS eine Versorgungsspannung zu erzeugen.

Nachfolgend wird die Schaltungsanordnung des Ersatzschaltbilds näher erläutert. Die Antenne AN besteht im Ersatzschaltbild aus einem Wechselspannungsgenerator GA, der mit dem Bezugspotential verschaltet ist und einem Serienwiderstand RA. Ferner ist der Serienwiderstand RA mit einer Spule L1 verbunden, die in Reihe mit der Parallelschaltung der Kontaktfläche BP und dem Signalteil ST verschaltet ist. Die Kontaktfläche BP besteht aus einer Reihenschaltung von einem Kondensator CP und einem mit dem Bezugspotential verbundenen Widerstand RP. Der Signalteil ST läßt sich aus einer Reihenschaltung eines Kondensators CS und eines mit dem Bezugspotential verschalteten Lastwiderstands RS darstellen.

Im Folgenden wird die Funktionsweise des Ersatzschaltbildes erläutert. Der Wechselspannungsgenerator GA, beschreibt die von der Antenne AN aus dem Trägerfeld der Basisstation (nicht abgebildet) absorbierte Energie, die in Form einer Wechselspannung den Serienschwingkreis erregt, der aus dem Widerstand RA, der Spule L1, und den Kondensatoren CP und CS und den Widerständen RP und RS gebildet wird. Der bei der Erregung in der Antenne AN auftretende Verlust wird durch den Widerstand RA beschrieben, die Phasenverschiebung zwischen Strom und Spannung in der Antenne durch die Spule L1. In einer Wechselspannungsbeschreibung wird der Verlust als Realteil und die Phasenverschiebung als Imaginärteil dargestellt. Ferner ist die Kontaktfläche BP mit einem Imaginärteil, dargestellt durch den Kondensator CP, und einem Realteil, dargestellt durch den Widerstand RP, behaftet. Ebenso weist der Signalteil ST einen Imaginärteil, dargestellt durch den Kondensator CS, und einen Realteil, dargestellt durch den Widerstand RS, auf. Um die größtmögliche Spannung aus der aus dem elektromagnetischen Feld absorbierten Energie zu erzeugen, wird die Resonanzfrequenz des Serienschwingkreises auf die Trägerfrequenz entweder bei 868 MHz oder 2.45 GHz abgeglichen. Entsprechend der Resonanzbedingung, gegeben durch die Thomson Gleichung, muß die Gesamtkapazität der beiden Kondensatoren CP und CS, sowie die Induktivität der Spule L1 der Resonanzbedingung genügen. Durch den Serienschwingkreis wird die im Bereich von wenigen µV liegende Erregerspannung des Wechselspannungsgenerators GA proportional der Güte des Serienschwingkreises überhöht. Um eine große Spannungsüberhöhung zu erzielen, muß die Dämpfung d.h. die Summe der Realteile klein und das Verhältnis der Imaginärteile von Induktivität und Kapazität groß sein, um die ganze aus dem Trägerfeld aufgenommene Energie dem Signalteil auf einem hohen Spannungsniveau zur Erzeugung einer Versorgungsspannung zur Verfügung zu stellen. Da der Induktivitätswert der Spule L1 klein ist, müssen die Kapazitätswerte der Kondensatoren CP und CS sehr kleine Werte im Bereich aufweisen, um den Serienschwingkreis auf die Resonanzfrequenz der Trägerfrequenz abzugleichen, d.h. die mit der Kontaktfläche BP verbundene Kapazität CP (Imaginärteil) muß reduziert werden. Des Weiteren muß der mit der Kontaktfläche BP verbundene Realteil sehr klein sein, um eine hohe Güte im Serienschwingkreis zu erreichen und die aufgenommene Energie dem Signalteil ST, dargestellt durch den Widerstand RS, zur Erzeugung der Versorgungsspannung für die integrierte Schaltung IS zur Verfügung zu stellen.

Der in Figur 2a dargestellte Querschnitt durch eine Kontaktfläche innerhalb einer integrierten Halbleiteranordnung zeigt den bisherigen Stand der Technik. Die Bezeichnung DA bezeichnet eine Spiegelachse, d.h. die gezeigte Darstellung ist symmetrisch zu der Achse DA. Die Aufgabe der Kontaktfläche ist es, eine Fläche zur Aufnahme eines Bonds zur Verfügung zu stellen, um die Antenne AN mit der integrierten Schaltung IS zu verbinden.
Im Folgenden wird der Aufbau des Querschnittbildes in Verbindung mit einer vereinfachten Wechselspannungsbetrachtung erläutert. Unter der Kontaktfläche ALB1 auf einem Halbleiterkörper aus Silizium, die in einer obersten Metallebene liegt, ist eine Isolationsschicht ISO ausgebildet, die die Kontaktfläche ALB1 von einer unterliegenden niedrig dotierten Zone D1 eines ersten Leitfähigkeittyps isoliert. Eine sich an die Zone D1 anschließende gering dotierte Zone D2 des zweiten Leitfähigkeittyps, die im Allgemeinen als Substratdotierung bezeichnet wird, kennzeichnet das Bezugspotential und ist mittels einer hochdotierten Zone D2P, des zweiten Leitfähigkeitstyps, an einen Kontakt ALK angeschlossen. Um eine ausreichende Prozesssicherheit bei der Herstellung der integrierten Schaltung IS zu gewährleisten, muß zwischen der Kontaktfläche ALB1 und dem Kontakt ALK ein großer Mindestabstand a1 eingehalten werden, der im Bereich von einigen 10 µm liegt, und die Länge der Zone D2 zwischen der Zone D1 und der Zone D2P bestimmt. In einer vereinfachten Wechselspannungsbetrachtung entspricht die Schichtenfolge aus der Kontaktfläche und der Zone D1 einem Kondensator mit einem Kapazitätsbelag CP, wobei die gering dotierte Zone D1 des zur Substratdotierung entgegengesetzten Leitfähigkeitstyps bewirkt, daß der kapazitive Beitrag CP der Kontaktflächen nicht sehr groß wird. In Serie zu dem Kondensator CP liegt ein Widerstand RP, der durch die große Länge der Zone D2 in Verbindung mit der geringen Dotierung einen hohen Wert aufweist.

Im Folgenden wird mittels des in Figur 2b dargestellten HF-Ersatzschaltbild eine ausführliche Wechselspannungsbetrachtung des in der Figur 2a gezeigten Schichtaufbaus durchgeführt.

Die Kontaktfläche ALB1 und die Zone D1 bilden einen Kondensator mit der Kapazität C1. Dazu in Serie liegt eine Diode DD1D2, die durch die Grenzfläche der Zonen D1/D2 gebildet wird, und ein Widerstand RS1, der sich aus der Länge der Zone D2 zwischen der Diode DD1D2 und dem Kontakt ALK ergibt. Im HF-Ersatzschaltbild wird die Diode DD1D2 als Parallelschaltung aus einem Widerstand XRC2 und einem Kondensator C2 und einer dazu in Serie geschalteten Widerstand RSC2 dargestellt. Die Gesamtkapazität CP bestimmt sich aus der Summe der Kapazitätswerten C1 und C2, der Serienwiderstand RP ergibt sich aus der Summe der Widerstände RSC2 und RS1. Trotz der niedrigen Dotierung der Zone D1 und der Serienschaltung von der Kapazität C1 und C2, ist der Kapazitätswert CP sehr groß und liegt im Bereich von 40 fF, da sowohl die Zone D1 groß als auch die Diode DD1D2 eine sehr große Grenzfläche aufweist. Durch die große Grenzfläche ist trotz der niedrigen Dotierung der Zone D1 der Widerstand XRC2 und der Widerstand RSC2 klein, d.h. die Kapazität weist einen großen Verlustbeitrag auf. Anderseits ist durch die große Länge und die niedrige Dotierung der Zone D2 der Widerstand RS1 und damit der Widerstand RP sehr groß. Da damit der Beitrag des Realteils groß ist, geht ein erheblicher Anteil der von der Antenne absorbierten Energie durch die Kontaktfläche verloren. Ferner bewirkt der große Kapazitätsbelag einen hohen Imaginärteil und bewirkt in Zusammenhang mit dem niedrigen Induktivitätswert, daß sich die Resonanzfrequenz des Serienschwingkreises nur schwer auf die Trägerfrequenz abstimmen läßt. Ohne eine drastische Reduzierung von den mit der Kontaktaufbau verknüpften Real und Imaginärteilen, läßt sich die energetische Reichweite des passiven Transponders mit vertretbarem Aufwand nicht erhöhen.

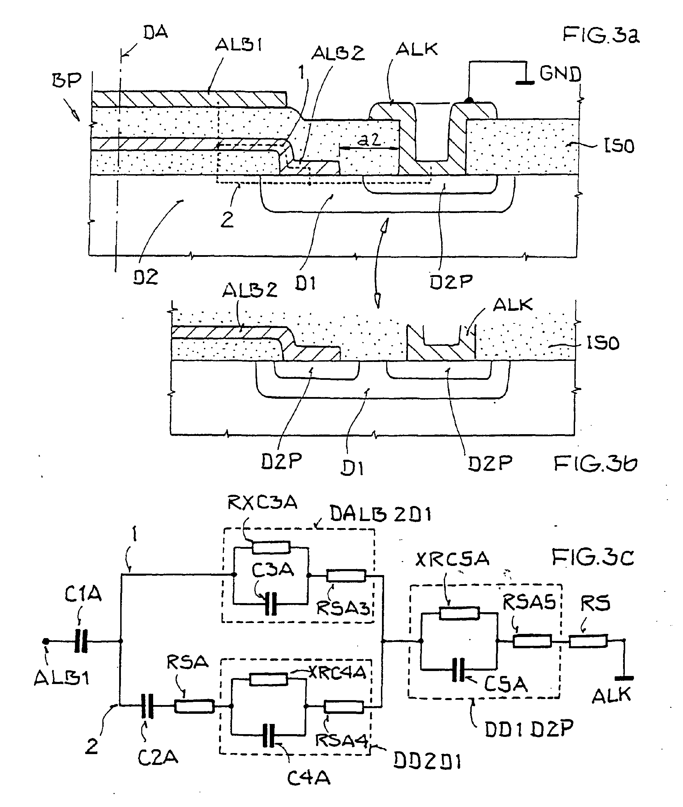

Der in Figur 3a dargestellte Schichtaufbau zeigt ein Anordnung zur Umsetzung des erfindungsgemäßen Verfahrens, mit der innerhalb eines üblichen Herstellungsprozesses einer integrierten Schaltung durch einen vorteilhaften Schichtaufbau, die mit der Kontaktfläche verbundenen Real und Imaginärteile stark verringert werden, sodaß sich die physikalischen Parameter des Serienschwingkreises sich die Beiträge des Signalteils ST bestimmen.
Wie in Zusammenhang mit der Figur 2 erläutert, ist die Achse DA spiegelsymmetrisch. Im Folgenden wird der Aufbau erläutert, wobei aufbauend auf die in Zusammenhang mit der Figur 2 gemachten Erläuterungen nur die Unterschiede dargestellt werden. Unter der Kontaktfläche ALB1 wird innerhalb der Isolationsschicht eine zweite leitfähige Schicht ALB2 eingebracht, deren Größe der Kontaktfläche ALB1 angepaßt wird, um eine gute Abschirmung zu erreichen. Die Schicht ALB2 wird seitlich mit der Zone D1 verbunden, um damit eine Schottky-Diode DALB2D1 zu erzeugen. Die Zone D1 umschließt dabei die Zone D2P vollständig, die eine Anschlußdotierung für den Kontakt ALK darstellt. Im Unterschied zu dem Abstand a1 in Figur 2a, ist der Abstand a2 zwischen dem Kontakt ALK und der leitfähigen Schicht ALB2 wesentlich kleiner und liegt im Bereich etwa 1 µm. Die Gesamtlänge der Zone D1 bestimmt sich aus der Breite des Anschlusses der Schicht ALB2 und einem Abstand a2, der sich aus dem Abstand zwischen der Schicht ALB2 und dem Anschluß des Bezugspotentials ALK ergibt. Für die Beschreibung des Stromflusses in einem HF-Ersatzschaltbild wird zwischen einem ersten Strompfad 1 und einem zweiten Strompfad 2 unterschieden, die zueinander parallel geschaltet sind.

Der in Figur 3b dargestellte Schichtaufbau gibt eine alternative Ausführungsform an, in der die Schottky-Diode DALB2D1 aus Figur 3a durch eine Standardausführung einer Diode DD2PD1 ersetzt wird, indem unterhalb des Kontaktbereichs der metallisch leitfähigen Schicht ALB2, eine weitere Zone D2P angeordnet wird. Anstelle der Schottky-Diode wird eine herkömmliche Diode durch die Grenzfläche der Zonen D2P und der Zone D1 gebildet. Dies ist vorteilhaft, wenn innerhalb des Herstellungsprozesses der Metallisierungsprozeß die Ausbildung eines Metall-Halbleiter Übergang nicht zulässt, aber trotzdem gute HF-Eigenschaften benötigt werden. Durch die kleine Grenzfläche der Dotierungszonen D2P und D1 weist die Diode DD2PD1 einen geringen Kapazitätsbelag auf. Ferner bleibt die Länge der Zone D1 im Wesentlichen unverändert. In der in 3c durchgeführten HF-Beschreibung entspricht das Ersatzschaltbild der Diode DD2PD1 dem der Schottky-Diode DALB2D1 aus der Figur 3a.

Das in der Figur 3c dargestellte HF-Ersatzschaltbild beschreibt die in unter der Figur 3a dargestellte Schichtaufbau. Die Kontaktfläche ALB1 und die Schicht ALB2 bilden mit der Schicht ISO die Kapazität C1A. Dazu in Serie liegt die Parallelschaltung aus dem Strompfad 1 und dem Strompfad 2. Der Strompfad 1 besteht aus der Schottky-Diode DALB2D1. Im Ersatzschaltbild besteht die Schottky-Diode DALB2D1 aus einem Kondensator C3A, der parallel zu einem Widerstand XRC3A liegt und einem zu der Parallelschaltung in Serie liegenden Widerstand RS3A.. Durch den Metall-Halbleiterkontakt wird dabei ein geringer Kapazitätswert mit einer hohen Güte erreicht. Im Strompfad 2 liegt eine Kapazität C2A, die durch die Schicht ALB2 und der Zone D2 zusammen mit der Zone ISO gebildet wird, in Serie mit einem Widerstand RSA, der sich aus dem Schichtwiderstand der Zone D2 bestimmt, und in Serie mit der Diode DD2D1, die sich aus der Grenzfläche der Zonen D1/D2 ergibt. Im Ersatzschaltbild besteht die Diode DD2D1 besteht aus einem Kondensator C4A, der parallel zu einem Widerstand XRC4A verschaltet ist und einem zu der Parallelschaltung in Serie liegenden Widerstand RSA4. Beide Strompfade führen durch die Schicht D1, die durch die geringe laterale Ausdehnung einen vernachlässigbaren Widerstand aufweist. Anschließend liegt die Diode DD1D2P in Serie. Im Ersatzschaltbild besteht die Diode DD1D2P aus einer Kapazität C5A, die parallel zu einem Widerstand XRC5A liegt, wobei der Parallelschaltung ein Widerstand RS5A in Serie liegt und die Kapazität C5A durch die kleine Grenzfläche und der hohen Dotierung der Zone D2P einen kleinen Verlustwiderstand und eine große Güte aufweist. Des Weiteren wird der Kontakt ALK durch einen Widerstand RS dargestellt, dessen Widerstand durch die metallisch leitfähige Schicht sehr klein ist.
Im Folgenden wird die Funktionsweise erläutert. Um den Imaginärteil der Kontaktfläche, bestehend aus dem Beitrag der Kondensatoren zu unterdrücken, werden im Strompfad 1 der großen Kapazität C1A kleine Kapazitäten C3A und C5A mit größer Güte in Serie geschaltet werden. Insbesondere weist die Kapazität C3A, die sich aus dem Ersatzschaltbild der Schottky-Diode ableitet, einen sehr kleinen Kapazitätswert im Bereich von wenige fF auf. Ferner wird im Strompfad 1 auch der Realteil, d.h. die Verluste durch den Serienwiderstand weitestgehend unterdrückt, da sowohl die Beiträge der metallisch leitfähigen Schichten ALB2 und ALK vernachlässigbar sind, als auch der Serienwiderstand aus dem Beitrag der Zone D1 aufgrund des sehr kleinen Abstand a2 sehr gering ist. Ferner wird erreicht, daß im Strompfad 2, durch eine niedrige Dotierung der Serienwiderstand RSA im Vergleich zu den im Strompfad 1 vorliegenden Serienwiderstand der metallisch leitfähigen Schicht ALB2 groß ist. Da der Pfad 2 parallel zu dem Pfad 1 liegt, wird der relativ große Realteil des Strompfades 2 jedoch unterdrückt. Ferner ist durch die niedrige Dotierung der Zonen D1 und D2 die Kapazität des Kondensators C4A trotz der relativ großen Grenzfläche klein und weist gleichzeitig eine im Vergleich zu der aus der Schottky-Diode resultierenden Kapazität C3A eine sehr schlechte Güte auf. Damit wird der Beitrag zu dem Imaginärteil durch den Strompfad 2 unterdrückt. Der über den Strompfad 2 fließende HF-Strom ist damit vernachlässigbar. Insgesamt bestimmen damit die kleinen Realteil und Imaginärteil der im Strompfad 1 liegenden Bauelemete den Beitrag der Kontaktfläche zu den Real- und Imaginärteilen des Serienschwingkreis. Da die Beiträge der Kontaktfläche äußert klein sind, können diese jedoch gegenüber den Anteilen gegeben durch den Signalteil ST der integrierten Schaltung IS vernachlässigt werden.

Da sich aus der in der Figur 3b dargestellten Schichtaufbaus indem unter der Figur 3c abgebildeten Ersatzschaltbilds keine Änderung in der Anordnung der einzelnen Bauelemente ergibt, sind die unter den in Zusammenhang mit den Zeichnungsunterlagen der Figur 3c ausgeführten Erläuterungen auch für die Schichtaufbau der Figur 3b gültig.

## Patentansprüche

1. Verfahren zur Reduzierung der Verluste eines Antennenschwingkreises eines passiven Transponders, dessen Betrlebsenergle aus einem hochfrequenten elektromagnetlschen Trägerfeld kapazitiv entnommen wird, und
- der einen Halblatterkörper mit einer integrierten Schaltung (IS) mit einem Signalteil (ST) mit Bezugspotentialanschluß aufweist,
- der einen auf einem Träger angeordnete Antennenanordnung aufweist,
- die Antennenanordnung über eine auf dem Halblelterkörper angeschlossene Kontaktfläche (BP) mit der integrierten Schaltung (IS) verbunden Ist,
- bei dem die Antenne (AN) mit der Eingangskapazltät der integrierten Schaltung (IS) einen seriellen Schwingkrels bildet, wobei
zur Erhöhung der Güte des Antennenschwingkreises die parasitären kapazitiven und resistiven Anteile, die einen Strompfad zwischen der Kontaktfläche (BP) und dem Bezugspotential bilden, reduziert werden, indem der Strompfad an wenigstens einer Stelle, mittels einer Hintereinanderschaltung und Parallelschaltung von kapazitiven und resistiven Anteilen, in einen ersten Strompfad und einen zweiten zum ersten parallelen Strompfad aufgeteilt wird, und im ersten Strompfad eine erste Kapazität (C3A) mit einem ersten Widerstand (RSA3) in Serie geschaltet wird und Im zweiten Strompfad eine zweite Kapazl-tät (C2A, C4A) mit einem zweiten Widerstand (RSA, RSA4) in Serie geschaltet wird, wobei die erste Kapazität (C3A) eine höhere Güte als die zweite Kapazität (C2A, C4A) aufweist und der erste Widerstand (RSA3) einen kleineren Widerstandswert als der zweite Widerstand (RSA. RSA4) aufweist.

2. Verfahren nach Anspruch 1, **dadurch gekennzeichnet, daß** eine dritte Kapazität (C5A), die eine höhere Güte als die zweite Kapazität (C2A, C4A) aufweist, In Reihe mit den Bautellen des ersten und zweiten Strompfades geschaltet wird.

3. Verfahren nach Anspruch 1 oder Anspruch 2, **dadurch gekennzeichnet, daß** eine vierte Kapazität (C1A), die einen größeren Kapazltätswert als erste Kapazität (C3A) oder die zweite Kapazität (C2A, C4A) aufweist, in Reihe zu den Bauteilen des ersten und zweiten Strompfades geschaltet wird.

4. Verfahren nach Anspruch 1, **dadurch gekennzeichnet, daß** der Kapazltätswert der erste Kapazität (C3A) Im Bereich von einigen fF liegt.

5. Verfahren nach einem der Ansprüche 1 bis 4, **dadurch gekennzeichnet, daß** die erste Kapazität (C3A) als Schottky-Dlode ausgebildet wird..

6. Verfahren nach Anspruch 3, **dadurch gekennzeichnet, daß** die vierte Kapazltät (C1A) ausgebildet wird, indem innerhalb einer unter der Kontaktfläche (BP) liegenden Isolatlonsschicht (ISO) eine leitfähige Schicht (ALB2) eingezogen wird.

7. Halbleiteranordnung zur Umsetzung des erfindungsgemäßen Verfahrens nach einem der Ansprüche 1 bis 6 mit einer ersten leitfähigen Schicht (ALB1) als Kontaktfläche (BP), zur Verbindung einer Antenne (AN) mit einer integrierten Schaltung (IS), einer Isolationsschicht (ISO), einer ersten Zone (D1) eines ersten Leitfähigkeitstyps, einer zweiten Zone (D2) eines zweiten Leitfähigkeitstyps und einer dritten hochdotierten Zone (D2P) des zweiten Leitfähigkeitstyps, die einen Kontakt (ALK), der ein Bezugspotential darstellt, mit dem Halbleitersubstrat verbindet,
• **dadurch gekennzeichnet, daß**
• Innerhalb der Isolationsschicht (ISO) eine weitere leitfähige Schicht (ALB2) angeordnet ist, deren laterale Ausdehnung größer als die Ausdehnung der Schicht (ALB1) ist, und
• die Schicht (ALB2) eine Verbindung mit der ersten Zone (D1) aufweist, um eine Schottky-Diode zu bilden, und
• die ersten Zone (D1) die dritte Zone (D2P) umschlleßt.

8. Halbleiteranordnung nach Anspruch 7,
• **dadurch gekennzeichnet daß**
• unter dem Anschlußbereich der Schicht (ALB2) eine vierte Zone (D2PP), des zweiten Leltfähigkeitstyps angeordnet ist, die von der ersten Zone (D1) umschlossen wird.

## Claims

1. Method of reducing the losses of an antenna oscillator circuit of a passive transponder, the operating energy of which is capacitively derived from a high-frequency electronmagnetic carrier field, and
- which comprises a semiconductor body with an integrated circuit (IS) with a signal component (ST) with reference potential connection,
- which has an antenna arrangement arranged on a carrier
- the antenna arrangement is connected with the integrated circuit (IS) by way of a contact surface (BP) connected on the semiconductor body,
- in which the antenna (AN) together with the input capacitance of the integrated circuit (IS) forms a serial oscillator circuit, wherein
for increasing the quality of the antenna oscillator circuit the parasitic capacitive and resistive components, which form a current path between the contact surface (BP) and the reference potential, are reduced in that the current path is divided up at at least one point into a first current path and a second current path parallel to the first by means of a serial connection and parallel connection of capacitive and resistive components, and a first capacitance (C3A) is connected in series with a first resistance (RSA3) in the first current path and a second capacitance (C2A, C4A) is connected in series with a second resistance (RSA, RSA4) in the second current path, wherein the first capacitance (C3A) has a higher quality than the second capacitance (C2A, C4A) and the first resistance (RSA3) has a lower resistance value than the second resistance (RSA, RSA4).

2. Method according to claim 1, **characterised in that** a third capacitance (C5A), which has a higher quality than the second capacitance (C2A, C4A) is connected in series with the components of the first and second current path.

3. Method according to claim 1 or 2, **characterised in that** a fourth capacitance (C1A), which has a higher capacitance value than the first capacitance (C3A) or the second capacitance (C2A, C4A), is connected in series with the components of the first and second current path.

4. Method according to claim 1, **characterised in that** the capacitance value of the first capacitance (C3A) lies in the region of some fF.

5. Method according to any one of claims 1 to 4, **characterised in that** the first capacitance (C3A) is constructed as a Schottky diode.

6. Method according to claim 3, **characterised in that** the fourth capacitance (C1A) is constructed **in that** a conductive layer (A or B2) is included within an insulation layer (ISO) lying below the contact surface (BP).

7. Semiconductor arrangement for realisation of the method in accordance with the invention according to any one of claims 1 to 6, with a first conductive layer (ALB1) as contact surface (BP), for connection of an antenna (AN) with an integrated circuit (IS), an insulating layer (ISO), a first zone (D1) of a first conductivity type, a second zone (D2) of a second conductivity type and a third, highly-doped zone (D2P) of the second conductivity type, which connects a contact (ALK), which represents a reference potential, with the semiconductor substrate, **characterised in that** arranged within the insulating layer (ISO) is a further conductive layer (ALB2), the lateral extent of which is greater than the extent of the layer (ALB1), and the layer (ALB2) has a connection with the first zone (D1) in order to form a Schottky diode, and the first zone (D1) encloses the third zone (D2P).

8. Semiconductor arrangement according to claim 7, **characterised in that** a fourth zone (D2PP) of the second conductivity type is arranged below the connecting region of the layer (ALB2) and is enclosed by the first zone (D1).

## Revendications

1. Procédé de réduction des pertes d'un circuit résonnant d'un transpondeur passif, dont l'énergie de fonctionnement est prélevée de manière capacitive d'un champ porteur électromagnétique de haute fréquence, et qui présente
. un corps semi-conducteur comprenant un circuit intégré (IS) comportant une partie "signal" (ST) à connexion de potentiel de référence,
. un ensemble d'antenne installé sur un support,
. l'ensemble d'antenne étant relié, par l'intermédiaire d'une surface de contact (BP) montée sur le corps semi-conducteur, au circuit intégré (IS),
. dans lequel l'antenne (AN) forme avec la capacité d'entrée du circuit intégré (IS) un circuit résonnant série, procédé selon lequel
pour augmenter la qualité du circuit résonnant, on réduit les capacités parasites et les parties résistives qui constituent une voie de courant entre la surface de connexion (BP) et le potentiel de référence en divisant la voie de courant à un endroit au moins, au moyen d'un montage en série et d'un montage en parallèle de composants capacitifs et résistifs, en une première voie de courant et une deuxième voie de courant parallèle à la première, et en montant en série dans la première voie de courant une première capacité (C3A) présentant une première résistance (RSA3), et dans la deuxième voie de courant, une deuxième capacité (C2A, C4A) présentant une deuxième résistance (RSA, RSA4), la première capacité (C3A) étant de meilleure qualité que la deuxième capacité (C2A, C4A), et la valeur de résistance de la première résistance (RSA3) étant inférieure à celle de la deuxième résistance (RSA, RSA4).

2. Procédé selon la revendication 1, **caractérisé en ce qu'**une troisième capacité (C5A) de qualité supérieure à celle de la deuxième capacité (C2A, C4A), est montée en série avec les composants de la première et de la deuxième voie de courant.

3. Procédé selon la revendication 1 ou 2, **caractérisé en ce qu'**une quatrième capacité (C1A) présentant une valeur capacitive supérieure à celle de la première capacité (C3A) ou à celle de la deuxième capacité (C2A, C4A) est montée en série avec les composants de la première et de la deuxième voie de courant.

4. Procédé selon la revendication 1, **caractérisé en ce que** la valeur capacitive de la première capacité (C3A) est située dans une plage de quelques fF.

5. Procédé selon l'une quelconque des revendications 1 à 4, **caractérisé en ce que** la première capacité (C3A) est une diode Schottky.

6. Procédé selon la revendication 3, **caractérisé en ce que** la quatrième capacité (C1A) est réalisée en insérant dans une couche d'isolation (ISO) située sous la surface de connexion (BP) une couche conductrice (ALB2).

7. Ensemble semi-conducteur pour la transposition du procédé selon l'invention selon l'une quelconque des revendications 1 à 6, comprenant une première couche conductrice (ALB1) comme surface de contact (BP) pour relier une antenne (AN) à un circuit intégré (IS), une couche d'isolation (ISO), une première zone (D1) d'un premier type de conductivité, une deuxième zone (D2) d'un deuxième type de conductivité et une troisième zone à dopage élevé (D2P) du deuxième type de conductivité, qui relie un contact (ALK) représentant un potentiel de référence à un substrat semi-conducteur,
**caractérisé en ce que**
. à l'intérieur de la couche d'isolation (ISO) est disposée une couche conductrice supplémentaire (ALB2), dont l'extension latérale est supérieure à l'extension de la couche (ALB1), et **en ce que**
. la couche (ALB2) présente une liaison avec la première zone (D1) pour constituer une diode Schottky, et **en ce que**
. la première zone (D1) entoure la troisième zone (D2P).

8. Ensemble semi-conducteur selon la revendication 7,
**caractérisé en ce que**
. sous la zone de connexion de la couche (ALB2) est disposée une quatrième zone (D2PP), du deuxième type de conductivité, qui est entourée par la première zone (D1).
